# EUROPÄISCHE PATENTSCHRIFT

(11) **EP 3 421 394 B1**
(45) Veröffentlichungstag und Bekanntmachung des Hinweises auf die Patenterteilung: **01.04.2020**
(21) Anmeldenummer: 17178619.7
(22) Anmeldetag: 29.06.2017
(51) Int. Cl.: B65G 1/137, F25D 13/00, F25D 13/06, F25D 17/04, F24F 7/007, F25D 25/04, F25D 17/00

(54) **HOCHREGALLAGER UND VERFAHREN ZUM BETRIEB EINES SOLCHEN**
HIGH BAY WAREHOUSE AND METHOD FOR OPERATING SAME
ENTREPÔT DE STOCKAGE EN HAUTEUR ET SON PROCÉDÉ DE FONCTIONNEMENT

(43) Veröffentlichungstag der Anmeldung: 02.01.2019
(73) Patentinhaber: Fuchs, Peter, 76287 Rheinstetten (DE)
(72) Erfinder: Fuchs, Peter, 76287 Rheinstetten (DE)
(74) Vertreter: Schön, Thilo

(56) Entgegenhaltungen:
- DE-A1-102014 007 317
- DE-A1-102014 011 862

## Beschreibung

Die Erfindung betrifft ein Lagersystem nach dem Oberbegriff des Anspruchs 1 sowie ein Verfahren zum Betrieb eines solchen nach Anspruch 12.

Gattungsgemäße Lagersysteme sind im Stand der Technik seit langem bekannt und in Produktionsstätten weit verbreitet. Bei einem solchen Lagersystem handelt es sich um ein geschlossenes Lagersystem mit einem Gehäuse, welches wenigstens einen Transportbereich und einen dem Transportbereich benachbarten Lagerbereich umschließt. Sowohl Transportbereich als auch Lagerbereich erstrecken sich hierbei vertikal. Im Transportbereich ist wenigstens eine Warentransportrichtung vertikal verfahrbar und der wenigstens eine Lagerbereich weist eine Mehrzahl von Böden auf, durch welche die entsprechenden Lagerplätze jeweils oberhalb eines Bodens definiert sind.

Häufig ist es erwünscht, dass sämtliche im Lagerbereich gelagerten Waren innerhalb gewisser Toleranzen dieselben Umweltbedingungen, insbesondere dieselbe Lufttemperatur und gegebenenfalls auch dieselbe Luftfeuchtigkeit, vorfinden. Hierzu ist es bekannt, das Lagersystem mit einer Umlufteinrichtung auszustatten, deren Lufteinlass und Luftauslass jeweils im Transportbereich positioniert sind.

Es hat sich jedoch herausgestellt, dass aufgrund der komplexen Innengeometrie des wenigstens einen Lagerbereichs ohne zusätzliche Maßnahmen insbesondere in Bezug auf die Temperatur keine hinreichende Homogenität im Lagerbereich erzielbar ist.

Zur grundsätzlichen Lösung dieses Problems sind beispielsweise durch die DE 10 2014 011 862 A1 und die DE 10 2014 007 317 A1 Lagersysteme mit verbesserter Temperierung des Lagerbereichs bekannt geworden. Die dort vorgeschlagenen Lösungen funktionieren grundsätzlich sehr gut und liefern die notwendige Temperatur-Homogenität, nachteilig ist jedoch der relativ große Herstellungsaufwand eines entsprechenden Lagersystems. Weiterhin ist eine Umrüstung eines bestehenden Lagersystems nur mit erheblichem Aufwand oder gar nicht möglich.

Hiervon ausgehend stellt sich die vorliegende Erfindung die Aufgabe, ein gattungsgemäßes Lagersystem dahingehend weiterzubilden, dass mit einfachen Mitteln eine hinreichende Homogenität der Luftparameter, insbesondere der Temperatur, im wenigstens einen Lagerbereich herstellbar ist. Hierbei soll die technische Lösung insbesondere dergestalt sein, dass auch bestehende Lagersysteme ohne großen Aufwand entsprechend umgerüstet werden können.

Diese Aufgabe wird durch ein Lagersystem mit den Merkmalen des Anspruchs 1 gelöst. Ein Verfahren zum Betrieb eines solchen Lagersystems ist in Anspruch 12 angegeben.

Erfindungsgemäß ist an der Warentransportvorrichtung ein Luftumlenker angeordnet, welcher wenigstens ein relativ zur Warentransportvorrichtung bewegliches, antreibbares Element, insbesondere in Form eines Ventilators, weiter insbesondere in Form eines Radialventilators vom Typ "freilaufendes Rad" aufweist. Durch dieses antreibbare Element werden bei Betrieb Luftströme erzeugt, welche vorzugsweise eine horizontale Komponente haben. Hierdurch entsteht insbesondere im Bereich neben dem Luftumlenker ein Überdruck und in einem Bereich darunter oder darüber ein Unterdruck. Hierdurch wird Luft in die Lagerplätze hineingeblasen. Da sich zwischen den Böden und dem Gehäuse in der Regel ein Spalt befindet, erfolgt hierdurch ein Luftaustausch, an dem wenigstens zwei in vertikaler Richtung benachbarte Lagerplätze beteiligt sind. Da die Warentransportvorrichtung sämtliche Lagerplätze anfahren kann und dies beim regulären Betrieb in der Regel ohnehin tut, kann ein regelmäßiger und vollständiger Luftaustausch an allen Lagerplätzen erfolgen, so dass sich insbesondere keine "Wärmenester" bilden können.

Zusätzlich kann die Steuerung der Warentransportvorrichtung so programmiert sein, dass sie die Warentransportvorrichtung unabhängig von den "Transportaufträgen" ansteuert, wenn diese sich nicht häufig genug bewegt oder wenn bestimmte Lagerplätze nicht häufig genug angefahren werden. Eine solche Steuerung kann insbesondere auf zwei Arten in den Regelbetrieb eingreifen, wobei diese beiden Arten auch miteinander kombiniert werden können:
Zum einen kann vorgesehen sein, dass die Steuerung die Warentransportvorrichtung den Warentransportbereich einmal - vorzugsweise vollständig - durchfahren lässt, wenn diese einen Stillstand hatte, der eine vorbestimmte Zeitspanne (von beispielsweise einer halben Stunde) übersteigt.

Zum anderen ist es möglich in (vorzugsweise allen) Lagerbereichen Temperatursensoren anzuordnen und die Steuerung so zu programmieren, dass die Warentransportvorrichtung bewegt wird, wenn wenigstens ein Temperatursensor eine Temperatur misst, die eine definierte Grenztemperatur übersteigt. In diesem Fall kann die Warentransportvorrichtung einen Lagerbereich gezielt anfahren, wenn dessen Temperatur eine definierte Grenztemperatur übersteigt, oder die Transportvorrichtung kann so angesteuert werden, dass sie den gesamten Warentransportbereich einmal durchfährt.

Ein besonders einfacher und platzsparender Aufbau ergibt sich, wenn die Drehachse des Ventilators vertikal orientiert ist.

Durch Vorsehen wenigstens eines statischen Luftleit-Elements kann in manchen Anwendungsfällen die Effizienz gesteigert werden.

Es ist besonders bevorzugt, den Luftumlenker auf der Unterseite der Warentransportvorrichtung anzuordnen. Hierdurch bleibt zum einen die Oberseite der Warentransportvorrichtung frei und zum anderen können somit sämtliche Lagerplätze erreicht werden.

In der Regel wird das Lagersystem mittels einer Umlufteinrichtung temperiert. In diesem Fall ist es bevorzugt, dass ein Lufteinlass im oberen Endbereich des Transportbereichs und ein Luftauslass im unteren Endbereich des Transportbereichs angeordnet ist (oder umgekehrt), so dass ein vom Luftumlenker unabhängiger vertikaler Hauptluftstrom im Transportbereich erzeugbar ist. Es ist in diesem Fall weiter bevorzugt, dass das bewegliche, antreibbare Element einen Luftstrom erzeugt, welcher eine vertikale Komponente aufweist. Hierbei ist es weiter bevorzugt, dass diese vertikale Komponente dem Hauptluftstrom entgegengesetzt ist.

Um eine hinreichende Homogenität zu erzielen, ist es bevorzugt, dass im Betrieb das von der Umlufteinrichtung umgewälzte Luftvolumen wenigstens das 10-fache, vorzugsweise das 20-fache, des vom Gehäuse umschlossenen Volumens beträgt.

Weiterhin ist es bevorzugt, dass im Betrieb das vom Luftumlenker umgewälzte Luftvolumen wenigstens das 15-fache, vorzugsweise das 30-fache, des vom Gehäuse umschlossenen Volumens beträgt.

Weiterhin ist es möglich, den Luftumlenker zusätzlich zur verbesserten Kühlung wenigstens einer elektrischen Antriebseinheit der Warentransportvorrichtung zu nutzen.

Die Erfindung wird nun anhand bevorzugter Ausführungsbeispiele mit Bezug auf die Figuren näher beschrieben. Die Figuren zeigen:
- Figur 1: ein erstes Ausführungsbeispiel eines erfindungsgemäßen Lagersystems in einem schematisierten Querschnitt, wobei sich die Schnittebene vertikal erstreckt,

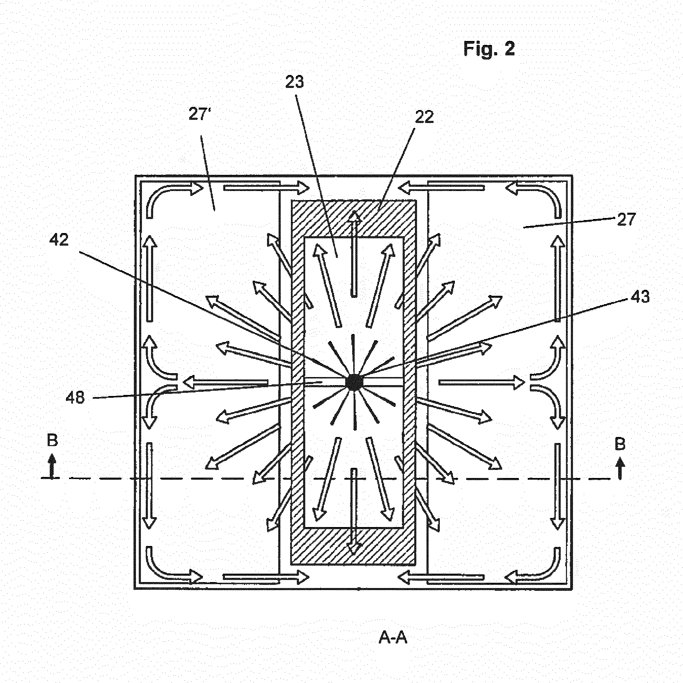

- Figur 2: das Lagersystem der Figur 1 in einem Schnitt entlang der Ebene A-A in Figur 1,
- Figur 3: ein zweites Ausführungsbeispiel der Erfindung in einer Figur 1 entsprechenden Darstellung,
- Figur 4: eine alternative Ausgestaltung des Luftumlenkers in einer der Figur 2 entsprechenden Darstellung,
- Figur 5: eine weitere alternative Ausgestaltung des Luftumlenkers in einer der Figur 4 entsprechenden Darstellung und
- Figur 6: ein Lagersystem entsprechend dem Stand der Technik in einer der Figur 1 entsprechenden Darstellung.

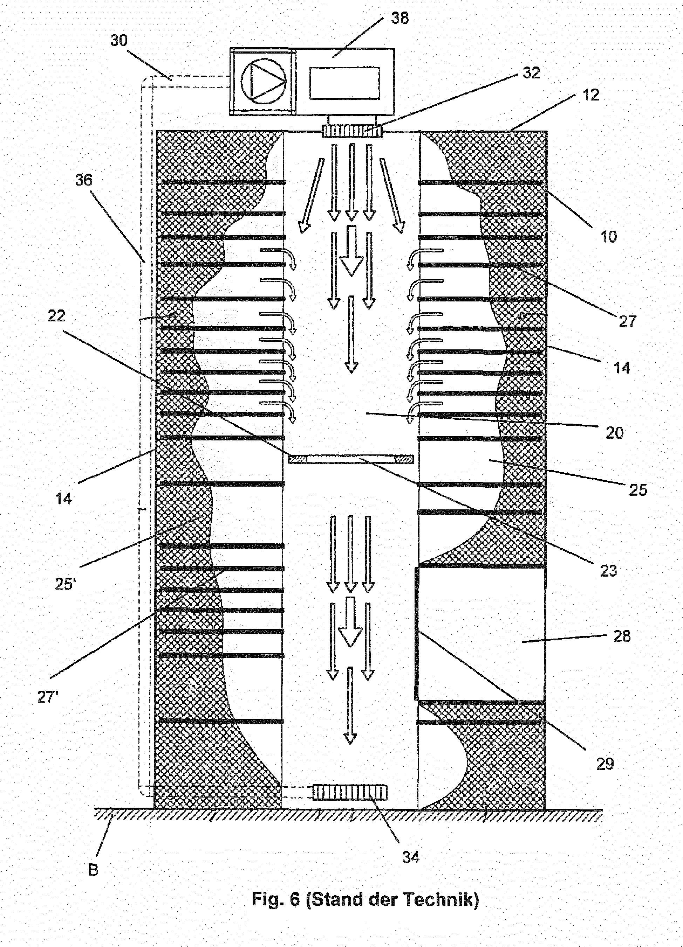

Zur Verdeutlichung des vorliegenden Problems und um die Erfindung, welche nachfolgend im Detail genauer beschrieben wird, besser verstehen können, wird mit Bezug auf die Figur 6 zunächst nochmals auf den Stand der Technik eingegangen.

Die Figur 6 zeigt ein Lagersystem (Hochregallager) nach dem Lift-Prinzip. Das Lagersystem weist ein Gehäuse 10 auf, welches gemeinsam mit einem Gebäudeboden B (welcher nicht zwangsläufig zum Gehäuse gehören muss) einen Transportbereich 20 und zwei sich jeweils neben dem Transportbereich erstreckende Lagerbereiche 25, 25' im Wesentlichen dicht umgibt. Der Transportbereich 20 und die beiden Lagerbereiche 25, 25' erstrecken sich in vertikaler Richtung. Das Gehäuse 10 weist ein Dach 12 und (zumeist vier) Seitenwände 14 auf.

Im Transportbereich 20 ist eine nach dem Liftprinzip arbeitende Warentransportvorrichtung 22 angeordnet und kann durch (nicht dargestellte) Antriebsaggregate vertikal verfahren werden, wie dies im Stand der Technik wohlbekannt ist. Weiterhin trägt die Warentransportvorrichtung 22 eine Querschubeinrichtung, wie dies im Stand der Technik ebenfalls bekannt ist (nicht dargestellt).

Die Warentransportvorrichtung 22 ist in Form eines Rahmens ausgebildet, welcher eine Öffnung 23 umläuft. Somit ist die Warentransportvorrichtung in vertikaler Richtung luftdurchlässig, solange sie leer ist. Wenn die Warentransportvorrichtung ein Tablar transportiert, verdeckt dieser die Öffnung 23.

In den Lagerbereichen 25, 25' sind jeweils eine Mehrzahl von Böden 27, 27' angeordnet, auf welchen Waren gelagert werden können. Die Zufuhr und Entnahme der entsprechenden Waren aus den Lagerplätzen, welche durch die Böden, 27, 27' definiert werden, erfolgt in bekannter Weise mittels der Warentransportvorrichtung 22. Weiterhin ist eine Bedienöffnung 28 vorgesehen, über welche der Transportbereich 20 zugänglich ist. Eine Tür 29 trennt die Bedienöffnung 28 vom Transportbereich 20, wenn keine Waren ein- oder ausgegeben werden, oder der Transportbereich zu anderen Zwecken (wie Wartungszwecken) zugänglich sein muss.

Die dem Transportbereich 20 abgewandten Enden der Böden 27, 27' sind von ihrer benachbarten Seitenwand 14 in der Regel etwas beabstandet.

Es ist weiterhin eine Umlufteinrichtung 30 vorgesehen. Diese weist einen Lufteinlass 32 im oberen Endbereich des Transportbereiches 20 auf, welcher im Dach 12 des Gehäuses 10 aufgenommen sein kann. Weiterhin ist ein Luftauslass 34 im unteren Endbereich des Transportbereiches 20 vorgesehen. Vom Luftauslass 34 führt ein Rückführrohr 36 zu einem Umwälz- und Klimatisierungsaggregat 38, welches wiederum mit dem Lufteinlass 32 verbunden ist.

Es wird somit ein im Wesentlich vertikal nach unten gerichteter Hauptluftstrom (zumeist Kaltluftstrom) im Transportbereich 20 erzeugt. Wie dies in Figur 6 schematisch angedeutet ist, wirkt dieser Kaltluftstrom auch etwas in die Lagerbereiche 25, 25' hinein, allerdings ergibt sich in der Praxis ein Temperaturgradient von innen (Transportbereichsseite) nach außen (Gehäuseseite), welcher für viele Anwendungen inakzeptabel hoch ist.

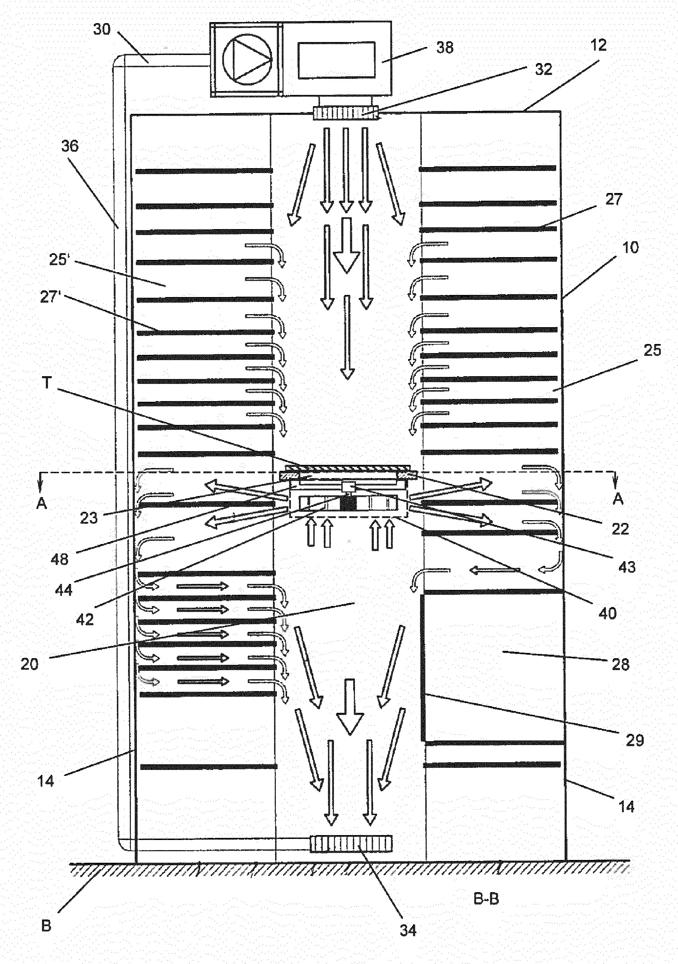

Figur 1 zeigt nun ein erfindungsgemäßes Lagersystem. Dieses Lagersystem ist grundsätzlich genauso aufgebaut wie das Lagersystem des Standes der Technik. Zur Vermeidung von Wiederholungen wird in Bezug auf den grundsätzlichen Aufbau auf die Erklärung zur Figur 6 verwiesen. Wesentlich beim gezeigten Ausführungsbeispiel ist, dass die Umlufteinrichtung auch hier im Transportbereich einen vertikal nach unten gerichteten Hauptluftstrom erzeugt. Dies ist bevorzugt, jedoch wären auch Ausführungsformen denkbar, bei denen der Hauptluftstrom nach oben gerichtet ist (das heißt, Lufteinlass und Luftauslass wären dann vertauscht). Der Unterschied zu dem in Figur 6 beschriebenen Lagersystems ist, dass an der Warentransportvorrichtung ein Luftumlenker 40 mit einem in Bezug auf die Warentransportvorrichtung beweglichen, antreibbaren Element angeordnet ist. Im gezeigten Ausführungsbeispiel ist dieses antreibbare Element in Form eines Ventilators 42, nämlich eines Radialventilators vom Typ "freilaufendes Rad", ausgebildet, welcher von einem Motor 43 antreibbar ist. Die Motor 43 und Ventilator 42 verbindende Antriebswelle 44 erstreckt sich in vertikaler Richtung. Der Motor 43 ist mittels Halterarm 48 mit der Warentransportvorrichtung 22 verbunden. Der gesamte Luftumlenker 40, welcher aus Haltearm 48, Motor 43, Antriebswelle 44 und Ventilator 42 besteht, befindet sich unterhalb der Warentransportvorrichtung 23, so dass deren Oberseite wie gewohnt zum Warentransport frei nutzbar ist. Die Figur 1 zeigt einen Zustand, in welchem ein Tablar T von der Warentransportvorrichtung transportiert wird.

Der Ventilator wirkt radial, wie dies durch die Pfeile in Figur 1 auch angedeutet ist. Sofern keine Leitelemente vorgesehen sind, bläst der Ventilator symmetrisch (also im 360°-Winkel) nach außen. Der vertikale Öffnungswinkel des so erzeugten Luftstroms kann beispielsweise 20° betragen. Die benötigte Luft saugt der Ventilator von unten oder (sofern kein Tablar T vorhanden ist) von unten und oben (also im Wesentlichen in vertikaler/axialer Richtung) an. Somit ergibt sich außer dem nach außen gerichteten, im wesentlichen horizontalen Luftstrom auf Höhe der Lagerplätze, vor welchen der Ventilator momentan positioniert ist, ein Unterdruck im Warentransportbereich 20 unterhalb des Ventilators 42. Hierdurch, und aufgrund der Tatsache, dass ein Spalt zwischen den Böden 27, 27' und der jeweils benachbarten Seitenwand 14 vorliegt, ergibt sich ein Luftstrom, wie er durch die Pfeile in Figur 1 angedeutet ist. Dies bedeutet, dass die durch den Lufteinlass 32 eingeblasene konditionierte (meist gekühlte) Luft den Lagerplatz oder die Lagerplätze vor denen der Ventilator positioniert ist, sowie darunter liegende Lagerplätze vollständig durchströmt, so dass ein im Wesentlichen vollständiger Luftaustausch erfolgt, wodurch die gewünschte Homogenität erzeugt wird. Oder mit anderen Worten: Der Luftumlenker erzeugt eine lokale Umleitung des Hauptluftstroms, welche zumindest zwei in vertikaler Richtung benachbarte Lagerplätze in horizontaler Richtung vollständig durchströmt, wobei zumindest in einem Lagerplatz die Luft nach außen und in einem anderen Lagerplatz die Luft nach innen strömt. Da die Warentransportvorrichtung 22 im Normalbetrieb in gewissen Zeitabständen jeden Lagerplatz anfährt, wird eine insgesamt sehr gute Homogenität der Luft innerhalb des Gehäuses 10 des Lagersystems hergestellt. Um dies weiter zu verbessern, kann der Bewegungsablauf der Warentransportvorrichtung 22 so programmiert werden, dass diese in gewissen Mindestzeitabständen Lagerplätze auch dann anfährt, wenn sie aktuell nicht be- oder entladen werden.

Der Motor 43 kann völlig unabhängig von der Antriebsvorrichtung der Warentransportvorrichtung 22 sein, so dass der Ventilator 42 auch dann drehen kann, wenn das Lagersystem aktuell nicht benutzt wird. Es ist jedoch auch möglich, die Stromversorgung des Motors 43 mit der Stromversorgung der Warentransportvorrichtung 22 zu koppeln, so dass eine Ventilation, wie sie eben beschrieben wurde, nur dann erfolgt, wenn die Warentransportvorrichtung 22 auch betrieben wird.

Es kann bevorzugt sein, den Ventilator 42 auch dann anzutreiben, wenn sich die Warentransportvorrichtung 22 bei geöffneter Tür 29 vor der Bedienöffnung 28 befindet, so dass dann ein verstärkter Luftaustausch zur Umgebung stattfinden kann.

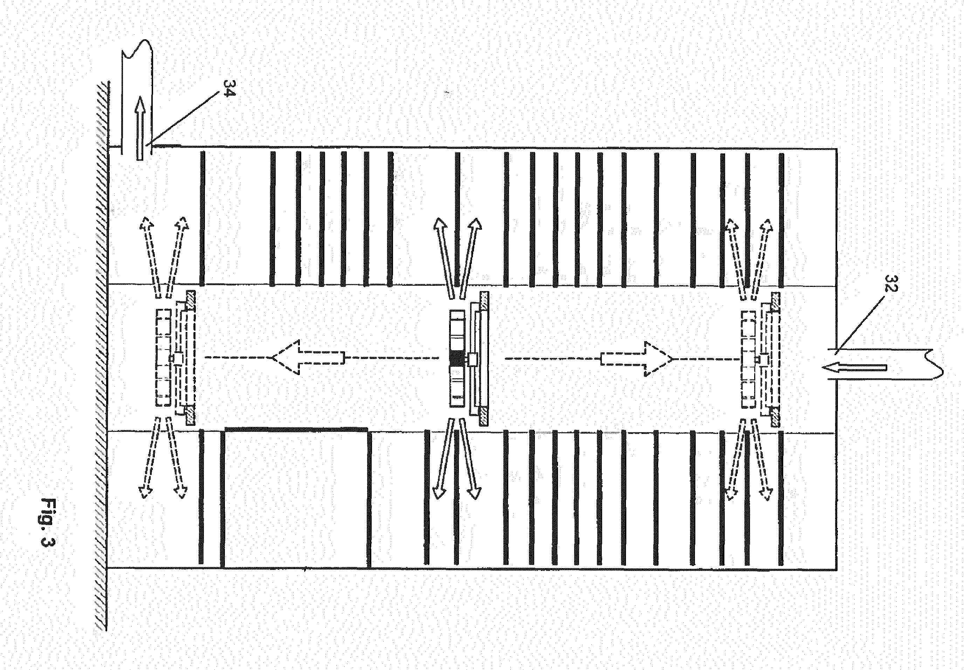

Wie man der Figur 3 entnehmen kann, ist es nicht zwingend, dass das Lagersystem eine eigene Umlufteinrichtung 30 aufweist. Grundsätzlich ist es auch möglich, das Lagersystem an ein externes Belüftungssystem anzuschließen. In Figur 3 sind verschiedene Positionen der Warentransportvorrichtung 22 dargestellt.

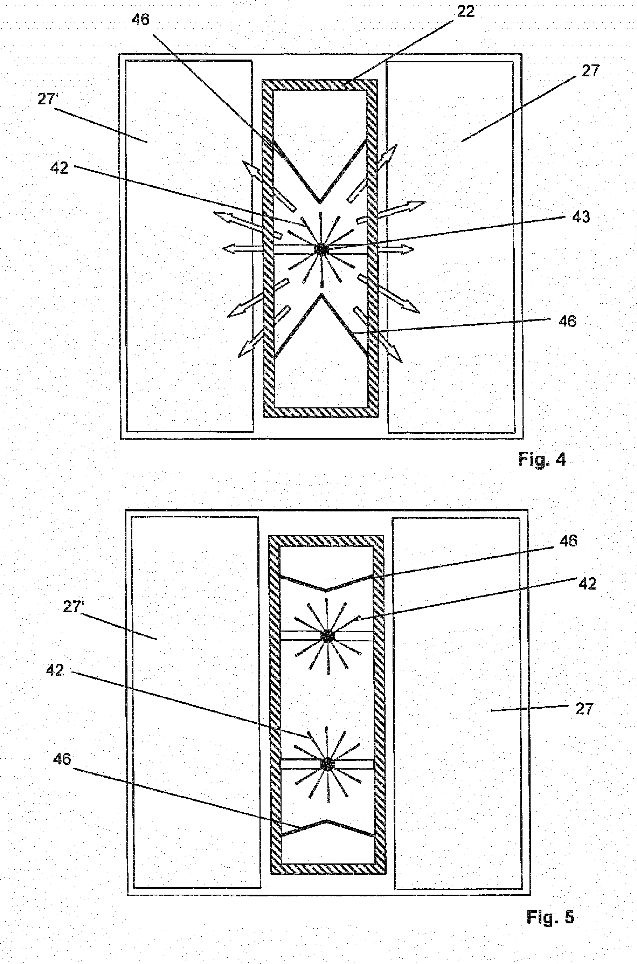

Wie man der Figur 4 entnimmt, kann der Luftumlenker 40 neben dem beweglichen, antreibbaren Element (in den gezeigten Ausführungsbeispielen dem Ventilator 42) auch ein oder mehrere statische Luftleit-Elemente 46 aufweisen, so dass der vom Ventilator 42 erzeugte Luftstrom nur in die Bereiche geleitet wird, in welchen er auch benötigt wird. Hierdurch kann sich in manchem Anwendungsfällen die Effizienz steigern lassen.

Wie man im Ausführungsbeispiel der Figur 5 entnimmt, ist auch der Einsatz von mehr als einem Ventilator 42 (hier von zwei Ventilatoren 42) möglich. Diese können (müssen jedoch nicht) mit statischen Luftleit-Elementen 46 kombiniert werden.

### Bezugszeichenliste

- 10: Gehäuse
- 12: Dach
- 14: Seitenwand
- 20: Transportbereich
- 22: Warentransportvorrichtung
- 23: Öffnung
- 25, 25': Lagerbereich
- 27, 27': Boden
- 28: Bedienöffnung
- 29: Tür
- 30: Umlufteinrichtung
- 32: Lufteinlass
- 34: Luftauslass
- 36: Rückführ-Rohr
- 38: Umwälz- und Klimatisierungsaggregat
- 40: Luftumlenker
- 42: Ventilator
- 43: Motor
- 44: Antriebswelle
- 46: Luftleit-Element
- 48: Haltearm
- B: Boden
- T: Tablar

## Patentansprüche

1. Lagersystem mit
einem sich vertikal erstreckenden Transportbereich (20), in welchem eine Warentransportvorrichtung (22) vertikal verfahrbar angeordnet ist,
wenigstens einem sich neben dem Transportbereich (20) erstreckenden, eine Mehrzahl von Böden (27, 27') aufweisenden Lagerbereich (25, 25'),
einem den Transportbereich (20) und den wenigstens einen Lagerbereich (25, 25') umschließenden Gehäuse (10),
**dadurch gekennzeichnet, dass** an der Warentransportvorrichtung (22) ein Luftumlenker (40) angeordnet ist, welcher wenigstens ein relativ zur Warentransportvorrichtung (22) bewegliches, antreibbares Element aufweist.

2. Lagersystem nach Anspruch 1, **dadurch gekennzeichnet, dass** das antreibbare Element im Betrieb einen Luftstrom erzeugt, welcher eine nach außen gerichtete horizontale Komponente aufweist.

3. Lagersystem nach einem der vorangehenden Ansprüche, **dadurch gekennzeichnet, dass** das antreibbare Element ein Radialventilator (42) mit einer vorzugsweise vertikal orientierten Drehachse ist.

4. Lagersystem nach einem der vorangehenden Ansprüche, **dadurch gekennzeichnet, dass** der Luftumlenker (40) weiterhin wenigstens ein statisches Luftleit-Element (46) aufweist.

5. Lagersystem nach einem der vorangehenden Ansprüche, **dadurch gekennzeichnet, dass** der Luftumlenker (40) auf der Unterseite der Warentransportvorrichtung (22) angeordnet ist.

6. Lagersystem nach einem der vorangehenden Ansprüche, **dadurch gekennzeichnet, dass** wenigstens ein Lufteinlass (32) zum Zuführen von Luft in den Transportbereich und ein Luftauslass (34) zum Auslassen von Luft aus dem Transportbereich (20) vorgesehen sind, wobei Lufteinlass (32) und Luftauslass (34) vorzugsweise Teil einer Umlufteinrichtung (30) sind.

7. Lagersystem nach Anspruch 6, **dadurch gekennzeichnet, dass** die Umlufteinrichtung (30) weiterhin wenigstens einen Luftkonditionierer aufweist.

8. Lagersystem nach Anspruch 6 oder Anspruch 7, **dadurch gekennzeichnet, dass** der Lufteinlass (32) im oberen Bereich des Transportbereichs (20) und der Luftauslass (34) im unteren Bereich des Transportbereichs (20) angeordnet ist, oder dass der Lufteinlass (32) im unteren Bereich des Transportbereichs (20) und der Luftauslass (34) im oberen Bereich des Transportbereichs (20) angeordnet ist.

9. Lagersystem nach einem der Ansprüche 6 bis 8, **dadurch gekennzeichnet, dass** das von der Umlufteinrichtung (30) im Betrieb pro Stunde umgewälzte Luftvolumen wenigstens das 10-fache des vom Gehäuse (10) umschlossenen Volumens beträgt.

10. Lagersystem nach einem der vorangehenden Ansprüche, **dadurch gekennzeichnet, dass** das vom Luftumlenker (40) im Betrieb pro Stunde umgewälzte Luftvolumen wenigstens das 15-fache des vom Gehäuse (10) umschlossenen Volumens beträgt.

11. Lagersystem nach einem der vorangehenden Ansprüche, **dadurch gekennzeichnet, dass** die dem Transportbereich (20) abgewandten Enden der Böden (27, 27') vom Gehäuse (10) beabstandet sind.

12. Verfahren zum Betrieb eines Lagersystems nach einem der vorangehenden Ansprüche, wobei durch Betrieb des Luftumlenkers (40) ein vorzugsweise im Wesentlichen vollständiger Luftaustausch in den durch die Böden (27, 27') definierten Lagerplätzen erfolgt.

13. Verfahren nach Anspruch 12, **dadurch gekennzeichnet, dass** eine Steuerung der Warentransportvorrichtung (22) diese dahingehend ansteuert, dass sie den Transportbereich (20), vorzugsweise vollständig, auch dann durchfährt, wenn keine Warenbewegung stattfindet, wenn die Warentransportvorrichtung (22) zuvor länger als eine vorbestimmt Zeitdauer stillstand.

14. Verfahren nach Anspruch 12 oder Anspruch 13, **dadurch gekennzeichnet, dass** im Lagerbereich (25, 25') wenigstens ein Temperatursensor angeordnet ist und dass die Steuerung der Warentransportvorrichtung (22) diese dahingehend ansteuert, dass sie sich bewegt, wenn der Temperatursensor eine Temperatur misst, welche eine definierte Temperatur übersteigt.

15. Verfahren nach Anspruch 14, **dadurch gekennzeichnet, dass** jeder Lagerplatz einen Temperatursensor aufweist und dass die Warentransportvorrichtung (22) bei Temperaturüberschreitung in einem Lageplatz diesen gezielt anfährt.

## Claims

1. Storage system comprising:
a vertically extending transport area (20) in which a goods transporting device (22) is arranged such that it can move vertically,
at least one storage area (25, 25') extending next to the transport area (20) and having a plurality of floors (27, 27'),
a housing (10) enclosing the transport area (20) and the at least one storage area (25, 25'),
**characterized in that** an air deflector (40) is arranged on the goods transporting device (22) which comprises a drivable element being mobile relative to the goods transporting device (22).

2. Storage system according to claim 1, **characterized in that** the drivable element generates an air stream when in operation, said air stream having a horizontal component directed to the outside.

3. Storage system according to one of the preceding claims, **characterized in that** the drivable element is a radial ventilator (42), preferably having a vertically orientated rotation axis.

4. Storage system according to one of the preceding claims, **characterized in that** the air deflector (40) further comprises a static air guiding element (46).

5. Storage system according to one of the preceding claims, **characterized in that** the air deflector (40) is arranged on the bottom side of the goods transporting device (22).

6. Storage system according to one of the preceding claims, **characterized in that** at least one air inlet (32) for providing air to the transport area (20), and at least one air outlet (34) for releasing air from the transport area (20) are provided, wherein air inlet (32) and air outlet (34) are preferably parts of an air circulation facility (30).

7. Storage system according to claim 6, **characterized in that** the air circulation facility (30) further comprises at least one air conditioner.

8. Storage system according to claim 6 or to claim 7, **characterized in that** the air inlet (32) is arranged in the upper area of the transport area (20) and the air outlet (34) is arranged in the lower area of the transport area (20), or that the air inlet (32) is arranged in the lower area of the transport area (20) and the air outlet (34) is arranged in the upper area of the transport area (20).

9. Storage system according to one of the claims 6 to 8, **characterized in that** the air volume circulated by the operated air circulation facility (30) in one hour is at least 10 times the volume enclosed by the housing (10).

10. Storage system according to one of the preceding claims, **characterized in that** air volume circulated by the operated air deflector (40) in one hour is at least 15 times the volume enclosed by the housing (10).

11. Storage system according to one of the preceding claims, **characterized in that** the ends of the floors (27, 27') facing away from the transport area (20) are spaced from the housing (10).

12. Method for operating a storage system of one of the preceding claims, wherein due to the operation of the air deflector (40), a preferably basically complete air replacement takes place in the storage places defined by the floors (27, 27').

13. Method according to claim 12, **characterized in that** a controller of the goods transporting device (22) controls the goods transporting device in a way that it passes through the transport area (20), preferably completely, even when no goods transportation takes place, if the goods transporting device (22) has before been in rest for longer than a predefined period of time.

14. Method according to one of the claims 12 or 13, **characterized in that** at least one temperature sensor is arranged in in the storage area (25, 25') and that the controller controls the goods transporting device (22) in such a way that it moves if the temperature sensor measures a temperature exceeding a defined temperature.

15. Method according to claim 14, **characterized in that** each storage place has a temperature sensor and that the goods transporting device (22) arrives specifically at a storage place on a temperature exceedance **in that** storage place.

## Revendications

1. Système de stockage, avec
une zone de transport (20) s'étendant verticalement et au sein de laquelle un dispositif de transport de marchandises (22) est agencé de manière à pouvoir être déplacé verticalement,
au moins une zone de stockage (25, 25') s'étendant à côté de la zone de transport (20) et présentant une pluralité de plateaux (27, 27'),
une enceinte (10) entourant la zone de transport (20) et la au moins une zone de stockage (25, 25'),
**caractérisé en ce qu'**un déflecteur d'air (40) présentant au moins un élément entraînable mobile par rapport au dispositif de transport de marchandises (22) est agencé au niveau du dispositif de transport de marchandises (22).

2. Système de stockage selon la revendication 1, **caractérisé en ce que** l'élément entraînable génère en cours de fonctionnement un courant d'air qui présente une composante horizontale dirigée vers l'extérieur.

3. Système de stockage selon l'une quelconque des revendications précédentes, **caractérisé en ce que** l'élément entraînable est un ventilateur radial (42) avec un axe de rotation orienté de préférence verticalement.

4. Système de stockage selon l'une quelconque des revendications précédentes, **caractérisé en ce que** le déflecteur d'air (40) présente en outre au moins un élément de guidage d'air statique (46).

5. Système de stockage selon l'une quelconque des revendications précédentes, **caractérisé en ce que** le déflecteur d'air (40) est agencé sur la face inférieure du dispositif de transport de marchandises (22).

6. Système de stockage selon l'une quelconque des revendications précédentes, **caractérisé en ce qu'**au moins une entrée d'air (32) destinée à fournir de l'air dans la zone de transport et une sortie d'air (34) destinée à décharger de l'air à partir de la zone de transport (20) sont prévues, dans lequel l'entrée d'air (32) et la sortie d'air (34) font préférentiellement partie d'un dispositif de recirculation d'air (30).

7. Système de stockage selon la revendication 6, **caractérisé en ce que** le dispositif de recirculation d'air (30) présente en outre au moins un climatiseur.

8. Système de stockage selon la revendication 6 ou la revendication 7, **caractérisé en ce que** l'entrée d'air (32) est agencée dans la région supérieure de la zone de transport (20) et la sortie d'air (34) est agencée dans la région inférieure de la zone de transport (20), ou **en ce que** l'entrée d'air (32) est agencée dans la région inférieure de la zone de transport (20) et la sortie d'air (34) est agencée dans la région supérieure de la zone de transport (20).

9. Système de stockage selon l'une quelconque des revendications 6 à 8, **caractérisé en ce que** le volume d'air horaire mis en circulation par le dispositif de recirculation d'air (30) en cours de fonctionnement est d'au moins 10 fois le volume contenu dans l'enceinte (10).

10. Système de stockage selon l'une quelconque des revendications précédentes, **caractérisé en ce que** le volume d'air horaire mis en circulation par le déflecteur d'air (40) en cours de fonctionnement est d'au moins 15 fois le volume contenu dans l'enceinte (10).

11. Système de stockage selon l'une quelconque des revendications précédentes, **caractérisé en ce que** les extrémités, détournées de la zone de transport (20), des plateaux (27, 27') se trouvent à une certaine distance de l'enceinte (10).

12. Procédé de fonctionnement d'un système de stockage selon l'une quelconque des revendications précédentes, dans lequel un renouvellement préférentiellement essentiellement complet de l'air a lieu dans les emplacements de stockage définis par les plateaux (27, 27') grâce au fonctionnement du déflecteur d'air (40).

13. Procédé selon la revendication 12, **caractérisé en ce qu'**une commande du dispositif de transport de marchandises (22) commande celui-ci de sorte qu'il traverse la zone de transport (20) préférentiellement complètement, même si aucun mouvement de marchandises n'a lieu, lorsque le dispositif de transport de marchandises (22) est auparavant à l'arrêt plus longtemps qu'une période de temps prédéterminée.

14. Procédé selon la revendication 12 ou la revendication 13, **caractérisé en ce qu'**au moins un capteur de température est agencé dans la zone de stockage (25, 25') et **en ce que** la commande du dispositif de transport de marchandises (22) commande celui-ci de sorte qu'il se déplace lorsque le capteur de température mesure une température qui dépasse une température définie.

15. Procédé selon la revendication 14, **caractérisé en ce que** chaque emplacement de stockage présente un capteur de température et **en ce que** le dispositif de transport de marchandises (22) met en marche celui-ci de manière ciblée lorsqu'il y a dépassement de température dans un emplacement de stockage.
